# EUROPÄISCHE PATENTSCHRIFT

(11) **EP 0 679 356 B1**
(45) Veröffentlichungstag und Bekanntmachung des Hinweises auf die Patenterteilung: **09.10.1996**
(21) Anmeldenummer: 95104438.7
(22) Anmeldetag: 25.03.1995
(51) Int. Cl.: A47J 43/08, A47J 43/06

(54) **Elektrisch betriebener Handrührer mit einem Zusatzgerät**
Electrically operated hand mixer with an accessory appliance
Mixeur à main électrique avec un dispositif accessoire

(30) Priorität: 25.04.1994 DE 4414415
(43) Veröffentlichungstag der Anmeldung: 02.11.1995
(73) Patentinhaber: Braun Aktiengesellschaft, 60326 Frankfurt am Main (DE)
(72) Erfinder: Rebordosa, Antonio, E - 08240 Manresa (Barcelona) (ES); Hernandez, Alejandro, E - 43710 Santa Oliva (Tarragona) (ES); Safont, Vicente, E - 08041 Barcelona (ES); Millan, Jose, E - 08028 Barcelona (ES)

(56) Entgegenhaltungen:
- EP-A- 0 529 287
- CH-A- 360 775
- CH-A- 435 589
- DE-A- 2 000 171
- DE-C- 1 162 517
- US-A- 3 556 303

## Beschreibung

Die Erfindung betrifft einen elektrisch betriebenen Handrührer mit einem Zusatzgerät, mit einem durch einen Deckel verschließbaren Behälter, mit mindestens zwei zum lösbaren Verbinden mit verschiedenen Arbeitswerkzeugen, wie Schneebesen oder Knethaken, geeignete Antriebswellen, von denen eine durch Aufsetzen des Handrührers auf den Deckel des Zusatzgerätes mit einer durch den Deckel nach oben hindurchtretenden Abtriebswelle drehfest verbunden werden kann, wobei die Abtriebswelle mit einem im Innern des Behälters zum Zwecke der Zerkleinerung von Nahrungsmittel antreibbaren Messers verbunden ist und wobei die drehfeste Verbindung durch Eingriff einer ersten in der Antriebswelle ausgebildeten und einer dazu korrespondierenden zweiten, an der Abtriebswelle ausgebildeten Verzahnung erfolgt.

Ein derartiges Zusatzgerät für einen Handrührer ist beispielsweise aus der schweizerischen Patentschrift 360 775 bekannt. Zum Antrieb des im Zusatzgerät befindlichen Messers dient hier ein elektrisch betriebener Handrührer, der an seiner Unterseite zwei als Antriebswellen ausgebildete Arbeitswellen aufweist, von denen die eine Antriebswelle mit einer aus dem Deckel des Zusatzgerätes nach oben herausragenden Abtriebswelle zum Antrieb des Arbeitswerkzeuges kuppelbar ist. Damit beim Aufsetzen des Handrührers auf das Zusatzgerät die an der Antriebswelle ausgebildete Verzahnung in die der Antriebswelle zugeordnete Verzahnung der Abtriebswelle eingreift, muß der Handrührer gegenüber dem Zusatzgerät soweit verdreht werden, bis ein Eingreifen der Verzahnungen ineinander erfolgt. Dies wird einer Bedienungsperson dadurch erkennbar, wenn der Handrührer einen ersten Anschlag überwindet. Dieser Anschlag wird dadurch gebildet, wenn die Verzahnungen lediglich aufeinanderliegen und noch nicht ineinander eingreifen. Sobald die erste und zweite Verzahnung ineinandergreifen, nähert sich der Handrührer dem Zusatzgerät soweit, bis die Unterseite des Gehäuses des Handrührers an der Oberseite des Deckels des Zusatzgerätes auf Anlage gelangt. In dieser Stellung hat der Handrührer mit dem Zusatzgerät die Arbeitsstellung erreicht und die Verzahnungen von An- und Abtriebswelle sind drehfest miteinander verbunden, d.h., sie stehen in gemeinsamem Zahneingriff.

Aus der EP-B-0 221 392 ist weiterhin ein Zusatzgerät zum Zerkleinern von Nahrungsmitteln bekannt, das durch Aufsetzen eines elektrisch betriebenen, als Stabmixer ausgebildeten Handrührers antreibbar ist. Bei diesem Zusatzgerät greift das am Stabmixer in seiner Glocke drehbar ausgebildete, verhältnismäßig stumpfe Messer in die am Zusatzgerät ausgebildete Kupplungsanordnung ein. Ein sicheres Einkuppeln wird dadurch gewährleistet, daß an der Kupplungsanordnung zum Zusatzgerät hin schräg verlaufende Rampen ausgebildet sind, durch die ein Einführen des Messers bzw. ein sicheres Eingreifen dieses in die Kupplungsanordnung gewährleistet wird.

Aufgabe der Erfindung ist es nunmehr, einen elektrisch betriebenen Handrührer als Antriebseinrichtung mit einem Zusatzgerät zum Zerkleinern von Nahrungsmitteln, wie Petersilie oder Zwiebeln, zu schaffen, durch das ein Einkuppeln des Handrührers auf das Zusatzgerät, ohne daß dabei aufwendige Ausrichtvorgänge durch eine Bedienungsperson nötig werden, erleichtert wird.

Diese Aufgabe wird durch die Merkmale des Patentanspruchs 1 gelöst. Dadurch, daß nach der Erfindung die mit der Antriebswelle des Handrührers in Eingriff bringbare Abtriebswelle bzw. die Antriebswelle selbst gegen die Kraft einer Feder verschiebbar ist, kann der Handrührer problemlos auf die Abtriebswelle aufgesetzt werden, wobei sich dieser aufgrund seiner Schwerkraft soweit absenken kann, bis er am Deckel des Zusatzgeräts anliegt. Dabei ist es gleichgültig, ob die an der Abtriebswelle ausgebildete Verzahnung bereits in die an der Antriebswelle des Handrührers ausgebildete Verzahnung eingreift oder ob diese noch nicht im Eingriff stehen, d.h., also lediglich gegeneinander anstoßen. Bei erstem Fall gleiten die Verzahnungen beim Absenken des Handrührers ungehindert ineinander, wobei die Abtriebswelle des Zusatzgeräts bzw. die Antriebswelle nicht gegen die Kraft der Feder axial verschoben werden muß. Im zweiten Fall, wo beim Aufsetzen des Handrührers die an der Antriebswelle ausgebildete Verzahnung gegen die Verzahnung der Abtriebswelle stößt, wird bei weiterer Verschiebung des Handrührers zum Zusatzgerät hin die An- bzw. Abtriebswelle gegen die Kraft der Feder derart verschoben, bis das Gehäuse des Handrührers am Deckel des Zusatzgerätes anliegt. Nach der Erfindung kann also entweder die Abtriebswelle des Zusatzgerätes, die Antriebswelle des Handrührers oder gar beide Kupplungen axial verschiebbar ausgebildet sein. Wichtig ist nur, daß mindestens eine Kupplung verschoben wird.

Beim Einschalten des Handrührers schnappt, sobald die an der Antriebswelle ausgebildete Zahnlücke mit den an der Abtriebswelle ausgebildete Verzahnungen fluchten, die Abtriebswelle dann durch die Kraft der Feder federnd in die Antriebswelle bzw. umgekehrt ein, und der Kuppelvorgang ist beendet. Die Antriebswelle ist nunmehr drehfest mit der Abtriebswelle verbunden, und es kann das im Zusatzgerät befindliche Arbeitswerkzeug über die Getriebeeinrichtung in Drehung versetzt werden. Diese erfindungsgemäße Anordnung erleichtert die Handhabung beim Aufsetzen des Handrührers auf das Zusatzgerät und macht somit die Geräteanordnung besonders bedienungsfreundlich.

Gemäß den Merkmalen des Patentanspruchs 2 ergibt sich durch den in der zweiten Antriebswelle des Handrührers eingreifenden Zapfen eine drehfeste Verbindung zwischen dem Handrührer und dem Zusatzgerät, so daR die beim Betrieb am Handrührer sich aufgrund der am Messer gebildeten Schneidkräfte ergebenden Reaktionskräfte auf einfache Weise auf das Zusatzgerät übertragen werden. Dies verhindert, daR der Handrührer sich nicht im Betrieb gegenüber dem Zusatzgerät verdreht. Der Zapfen dient dabei lediglich als Zentrier- und Abstützvorrichtung, so daß dieser nicht mit einer in die Verzahnung der zweiten Antriebswelle eingreifenden Verzahnung ausgebildet ist. Der Zapfen dient nach der Weiterbildung der Erfindung lediglich als Zentrier-und Abstützvorrichtung in Umfangsrichtung für die zweite Antriebswelle und somit für den gesamten Handrührer, so daß sich dieser nicht im Betrieb um seine eigene Achse drehen kann. Hierzu ist die Antriebswelle auf dem Zapfen frei drehbar geführt. Da beim Aufsetzen des Handrührers auf das Zusatzgerät durch gleichzeitiges Eingreifen sowohl der Abtriebswelle wie des Zapfens in die hierfür vorgesehenen Antriebswellen der Handrührer nicht mehr um seine Achse verdreht werden kann, ist es nach der Erfindung vorteilhaft, daß die mit der Verzahnung versehene Abtriebswelle gegen die Kraft einer Feder axial verschiebbar ist. Durch diese Anordnung kann nämlich der Handrührer problemlos auf dem Zusatzgerät aufgesetzt werden, ohne daR dabei gleich die an der Abtriebswelle ausgebildete, zweite Verzahnung in die an der Antriebswelle ausgebildete, erste Verzahnung eingreift. Dies kann nämlich nach der Erfindung erst dann erfolgen, wenn das Gerät eingeschaltet wird, wobei - sobald die an der ersten Verzahnung ausgebildeten Lücken mit den an der zweiten Verzahnung ausgebildeten Zähne fluchten - die Abtriebswelle sich in die Antriebswelle hineinbewegt, wodurch eine drehfeste Verbindung zwischen diesen Teilen erfolgt.

Im Sinne der Erfindung ist es selbstverständlich auch denkbar, daß für die in der Regel als Hülse mit einer Innenverzahnung ausgebildete Antriebswelle eine Welle mit Außenverzahnung und für die als Welle mit einer Außenverzahnung versehene Abtriebswelle eine Hülse mit Innenverzahnung verwendet werden kann.

Die Merkmale des Patentanspruchs 3 ermöglichen einen festen Sitz des Handrührers auf dem Zusatzgerät. Hierbei dienen die ohnehin für die Arbeitswerkzeuge, wie Schneebesen oder Knethaken, dienenden Rasteinrichtungen gleichzeitig als Befestigungsmittel am Zapfen, wobei dieser allerdings nach der Weiterbildung der Erfindung so ausgeformt ist, daß er in die an der zweiten Antriebswelle des Handrührers ausgebildete Rasteinrichtung federnd eingreift. Dabei ergibt sich weiterhin der Vorteil, daß ein sehr leichtes Lösen und Abheben des Handrührers dadurch erfolgt, daß durch Betätigen der ohnehin am Handrührer vorhandenen Auswerfereinrichtung die an der Antriebswelle ausgebildete Rasteinrichtung derart betätigt wird, daß ein leichtes Abheben des Handrührers von dem Zusatzgerät möglich wird.

Gemäß den Merkmalen des Patentanspruchs 4 gleitet im Betrieb des Zusatzgerätes die an der Antriebswelle ausgebildete Rasteinrichtung am Zapfen entlang, wobei allerdings aufgrund der Wahl der Werkstoffe der Gleitreibwiderstand sehr gering ist. Im Sinne der Erfindung ist es aber auch denkbar, daß der Zapfen drehbar im Deckel angeordnet ist, so daß zwischen der Rasteinrichtung und dem Zapfen keine relative Verdrehung erfolgen muß, da dies nunmehr zwischen dem Zapfen und dem Deckel erfolgt (Anspruch 5).

Gemäß den Merkmalen des Patentanspruchs 6 läßt sich, wenn zwischen der Abtriebswelle und der im Behälter des Zusatzgerätes drehbar angeordneten Arbeitswerkzeug ein Getriebe ausgebildet ist, die Abtriebswelle leicht axial verschieben. Hierdurch wird stets gewährleistet, daß die an der Abtriebswelle ausgebildete Verzahnung stets mit dem getriebeseitigen Zahnrad bei der axialen Verschiebung in Eingriff steht. Dabei ist es besonders vorteilhaft, daß die Abtriebswelle auf einem im Bodenteil des Getriebeaufsatzes drehfest gelagerten Zentrierbolzen drehbar gelagert ist (Anspruch 7). Hierdurch läßt sich die Abtriebswelle besonders einfach auf dem Zentrierbolzen axial verschieben.

Nach den Merkmalen des Patentanspruchs 8 ergibt sich eine besonders einfache Anordnung von Abtriebswelle und zweitem Zahnrad, wobei diese Teile, wenn sie aus Kunststoff ausgeformt wurden, auch einteilig ausgebildet sein können.

Durch die Weiterbildung der Merkmale des Patentanspruchs 9 wird ein Zusatzgerät geschaffen, bei dem die Abtriebswelle stets sicher durch die Feder in seine Ausgangslage zurückgestellt wird, wenn der Handrührer vom Zusatzgerät abgenommen wird. Die Ausgangslage der Abtriebswelle wird auch dann sicher erreicht, wenn diese beim Kuppelvorgang im Betrieb des Handrührers in die erste Verzahnung der Antriebseinrichtung drehfest einkuppelt.

Nach den Merkmalen des Anspruchs 10 kann die Kupplung entweder des Handrührgerätes oder des Zusatzgerätes soweit axial verschoben werden, bis der Handrührer auf dem Zusatzgerät aufliegt, wenn die Verzahnungen nicht beim Eingreifen gleich zueinander fluchten.

Ein Ausführungsbeispiel der Erfindung ist in der Zeichnung dargestellt und wird im folgenden näher erläutert. Es zeigen:
- Fig. 1: Längsschnitt durch das Zusatzgerät nach der Erfindung;
- Fig. 2: perspektivische Seitenansicht von rechts auf das von einer Bedienungsperson in ihren Händen gehaltene Zusatzgerät nach Fig. 1;
- Fig. 3: perspektivische Darstellung des Zusatzgerätes nach Fig. 3, wobei allerdings gerade der Handrührer auf das Zusatzgerät aufgesetzt wird;
- Fig. 4: Längsschnitt durch den am Deckel des Zusatzgerätes ausgebildeten Zapfen, in den die am Handrührer ausgebildete Rasteinrichtung rastend eingerastet ist, ohne daß dabei ein drehfester Eingriff der zugehörigen Verzahnung an dem Zapfen erfolgt und
- Fig. 5: Draufsicht von unten her auf das Handrührgerät im Bereich der Aufnahmeöffnungen, wobei gerade der Zustand angezeigt wird, in dem ein Knethaken in die hinter der Aufnahmeöffnung ausgebildete Antriebswelle mit Längsverzahnung eingesetzt wird.

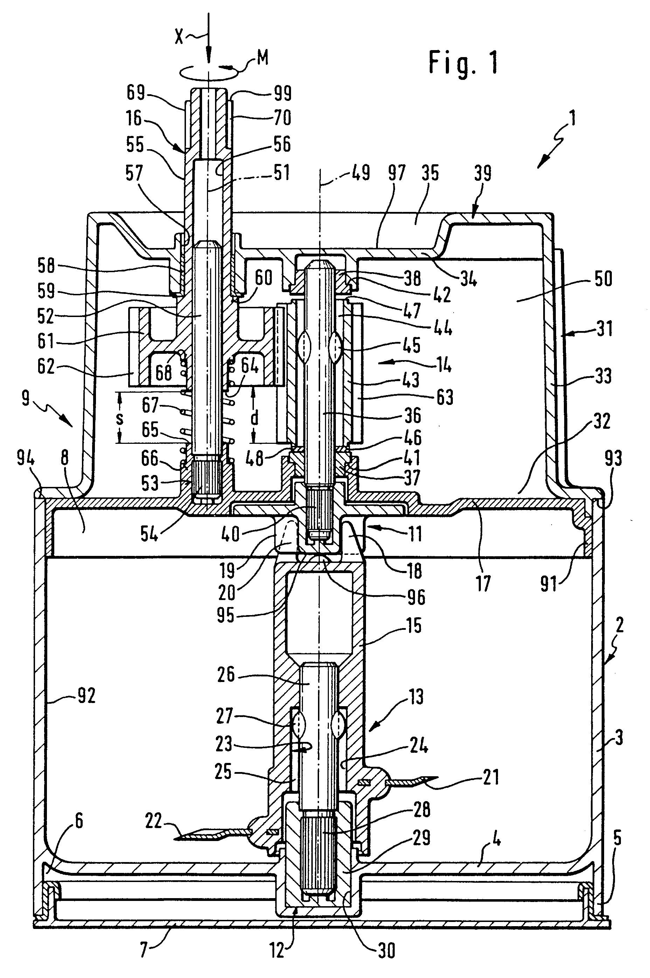

Gemäß den Figuren 1, 2 und 3 besteht das Zusatzgerät 1 aus einem Behälter 2, der wiederum aus einer zylindrischen, polygonförmigen Außenwandung 3 mit einem von unten her die Außenwandung 3 verschließenden Boden 4 besteht. Der Boden 4 weist einen in Verlängerung der Außenwandung 3 verlaufenden Ringbund 5 auf, deren nach unten gerichtete und ringförmig ausgebildete Ausnehmung 6 von einer Platte 7 verschlossen ist, die einerseits als Antirutsch-Unterlage für das Zusatzgerät 1 in dessen Betrieb dient und die andererseits auch als die Einfüllöffnung 8 verschließenden Deckel dient, wenn der gemäß den Figuren 1 bis 3 derzeit verschließende Deckel 9 von der Einfüllöffnung 8 des Behälters 2 abgenommen wurde. Der so verschlossene Behälter 2 kann dann zur Kühlung der bereits im Behälter zerkleinerten Nahrungsmittel im Kühlschrank abgestellt werden.

Der Deckel 9 dient zur Aufnahme eines Getriebes 14, das hier als Untersetzungsgetriebe dient und das die an der Abtriebswelle 16 vom Handrührer 10 eingeleitete Drehung M zu dem an der am Bodenteil 17 des Getriebeaufsatzes 9 hervorragenden Abtrieb 11 überträgt, von wo sie wiederum auf die Messer 21, 22 übertragen wird. Der Abtrieb 11 besteht aus am Umfang ausgebildeten Vorsprüngen 19 mit dazwischenliegenden Ausnehmungen 20, in die beim Aufsetzen des Getriebeaufsatzes 9 auf den Behälter 2 die am freien Ende an der Nabe 15 nach oben erstreckenden Mitnehmer 18 zur drehfesten Mitnahme eingreifen.

An der Nabe 15 sind in Nähe des Bodens 4 nach den Figuren 1 bis 3 sichelförmig verlaufende und diametral gegenüberliegend angeordnete Messer 21, 22 eingeformt, von denen das Messer 21 oberhalb des Messers 22 im Behälter 2 verläuft. Die Nabe 15 weist eine Stufenbohrung 23 auf, deren zweiter Abschnitt 24 mit einer Längsverzahnung 25 versehen ist, in die an einer Achse 26 ausgebildete Vorsprünge 27 drehfest eingreifen. Die Achse 26 weist an ihrem unteren Ende eine Längsverzahnung 28 auf, auf die eine Hülse 29 aufgepreßt ist. Die Hülse 29 gleitet in einer im Boden 4 zentral angeordneten Bohrung 30. Anstelle der Trennung von Achse 26 und Nabe 15 ist auch eine einteilige Variante möglich, deren Achse 26 dann ebenso über die Hülse 29 in die Bohrung 30 eingreift und dort frei drehbar zentriert ist.

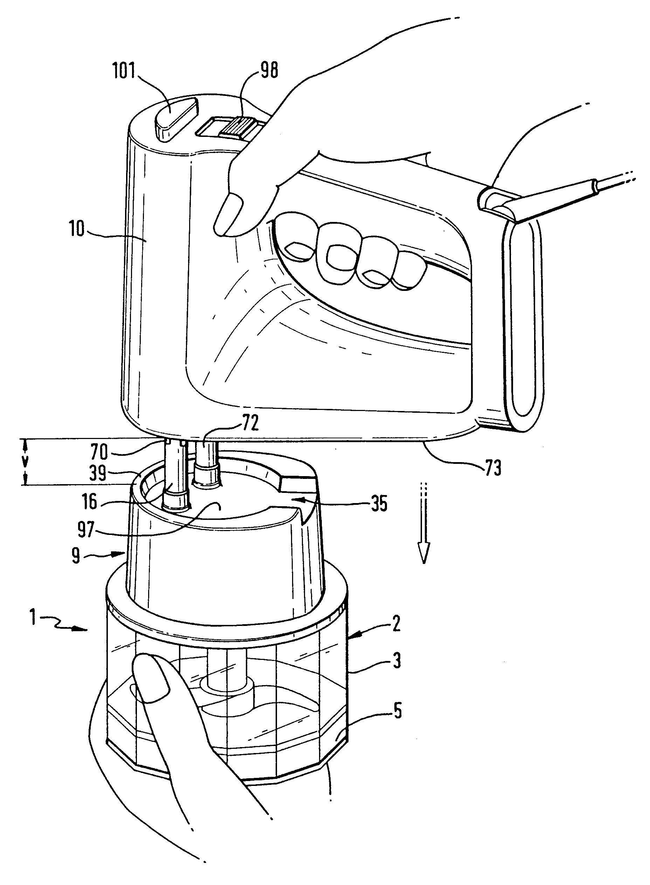

Nach Fig. 1 besteht weiterhin das Getriebegehäuse 9 aus einem sich vom Bodenteil 17 nach oben erstreckenden, topfförmigen Gehäuse 31, dessen nach unten hin gerichtete Öffnung 32 von dem Bodenteil 17 verschlossen ist. Dies kann beispielsweise durch Verschweißen, Verkleben oder sonstige dichte Befestigungsmittel erreicht werden. Das topfförmige Gehäuse 1 weist weiterhin eine im wesentlichen U-förmige Seitenwandung 33 auf, die von oben her durch das einteilig mit dem Seitenteil 33 ausgeformte Bodenteil 34 verschlossen ist. Das Bodenteil 34 weist eine Ausnehmung 35 auf, die zur Aufnahme des unteren Bereichs des Handrührers 10 dient, wenn dieser, wie dies Fig. 3 zeigt, auf das Zusatzgerät 1 aufgesetzt wird. Hierdurch wird eine besonders sichere Lage des Handrührers 10 auf dem Getriebeaufsatz 9 erreicht.

Gemäß Fig. 1 ist der sich vom Bodenteil 17 nach unten erstreckende Abtrieb 11 mit einer Welle 36 verbunden, die über an ihren beiden Enden ausgebildeten Gleitlagern 37, 38 einerseits am Bodenteil 17 und andererseits am Oberteil 39 drehbar gelagert ist. Auch hier ist der aus Kunststoff ausgeformte Abtrieb 11 auf der am unteren freien Ende der Welle 36 ausgebildeten Längsverzahnung 40 drehfest aufgeschrumpft. Die beiden Gleitlager 37, 38 weisen Ringstufen 41, 42 auf, über die sich die Gleitlager 37, 38 am Deckel 9 axial abstützen. Zwischen den beiden Gleitlagern 37, 38 ist auf der Welle 36 ein erstes Zahnrad 43 zentriert und drehfest mit diesem über eine im ersten Zahnrad 43 ausgebildete Längsverzahnung und mit ihr in Eingriff stehende, an der Welle 36 ausgebildete und diametral gegenüberliegende Mitnehmer 45 verbunden. Durch diese Verbindung wird eine drehfeste, aber axial verschiebbare Verbindung zwischen dem ersten Zahnrad 43 und der Welle 36 hergestellt. Das erste Zahnrad 43 weist an seinen stirnseitigen Enden Stirnflächen 46, 47 auf, die als Anlageflächen an den Gleitlagern 37, 38 dienen. Um die Reibung und den Verschleiß zwischen der Stirnfläche 46 und dem Gleitlager 37 gering zu halten - denn dort stützt sich die Anordnung aus Welle 36, erstes Zahnrad 43 und Abtrieb 11 ab - ist zwischen dem Zahnrad 43 und dem unteren Gleitlager 37 ein Gleitring 48 ausgebildet, der insbesondere den Verschleiß an dem aus Kunststoff hergestellten ersten Zahnrad 43 gering hält.

Während die Welle 36 und die Nabe 15 nach Fig. 1 im Mittelpunkt des Zusatzgerätes 1 angeordnet sind, also auf der Mittelachse 49 des Zusatzgerätes 1 liegen, ist seitlich neben dieser Anordnung in dem von dem Deckel 9 gebildeten Getrieberaum 50 auf einer weiteren zur Mittelachse 49 parallel verlaufenden Längsachse 51 ein Zentrierbolzen 52 angeordnet, der im Bodenteil 17 in einer Bohrung 53 mittels der am freien Ende des Zentrierbolzens 52 ausgebildeten Längsverzahnung 54 fest in dieser eingepreßt ist. Auf der anderen Seite des Zentrierbolzens 52 ist dieser von der hülsenförmig ausgebildeten und mit einer Bohrung 56 versehenen Abtriebswelle 55 umgeben, wobei die Bohrung 56 als Gleitlager zwischen dem Zentrierbolzen 52 und der Abtriebswelle 16 dient.

Die Außenfläche 55 der Abtriebswelle 16 ist in einer im Oberteil 39 ausgebildeten Bohrung 57 drehbar gelagert, wobei allerdings zur Verminderung des Verschleißes zwischen der Bohrung 57 und der Außenfläche 55 noch ein Gleitlager 58, wie es aus Fig. I zu erkennen ist, ausgebildet sein kann. Das Gleitlager weist eine Ringstufe 59 auf, die als Anlage an einer an der Außenfläche 55 ausgebildeten, ringförmigen Erweiterung 60 dient, damit die Abtriebswelle 16 gemäß Fig. 1 nach oben einen Anschlag am Oberteil 39 aufweist.

Nach Fig. 1 ist im unteren Bereich der Abtriebswelle 16 ein zweites Zahnrad 61 angeformt, das über seine Längsverzahnung 62 mit der am ersten Zahnrad 43 ausgebildeten Längsverzahnung 63 ineinander kämmen. Wie aus Fig. 1 deutlich ersichtlich, ist die Länge des ersten Zahnrads 43 mit seiner zugehörigen Längsverzahnung 63 wesentlich länger als das zweite Zahnrad 61 mit seiner Längsverzahnung 62. Dieser Überstand d entspricht dem Weg s bzw. ist größer als der Weg s, den die Abtriebswelle 16 mit ihrem zweiten Zahnrad 61 gemäß Fig. 1 nach unten zurücklegen kann, bis sein freies Ende 64 an der am freien Ende der Bohrung 53 ausgebildeten Stirnfläche 65 des Bodenteils 17 anschlägt. Der Weg s muß wiederum mindestens so groß oder größer als der Weg v sein. Der Weg v ergibt sich dadurch, wenn die Oberkante 99 der zweiten Verzahnung 70 der Antriebswelle 16 auf der Unterkante 100 der Antriebswelle 90 der ersten Verzahnung 71 gerade aufliegt. In diesem Fall ergibt sich zwischen der Unterseite des Gehäuses 73 und dem Boden der Ausnehmung 35 das Maß v.

Am Bodenteil 17 stützt sich nach Fig. 1 an der Ringfläche 66 eine als Spiralfeder ausgebildete Druckfeder 67 ab, die auf ihrer anderen Seite an einer an dem unteren Ende der Abtriebswelle 16 bzw. des zweiten Zahnrads 61 ausgebildeten Anschlagfläche 68 abstützt. Hierdurch wird die Abtriebswelle 16 mit ihrem Anschlag 60 gegen die Ringstufe 59 gedrückt und dort stets auf Anlage federnd gehalten, wenn auf die Abtriebswelle 16 von oben her kein Druck ausgeübt wird.

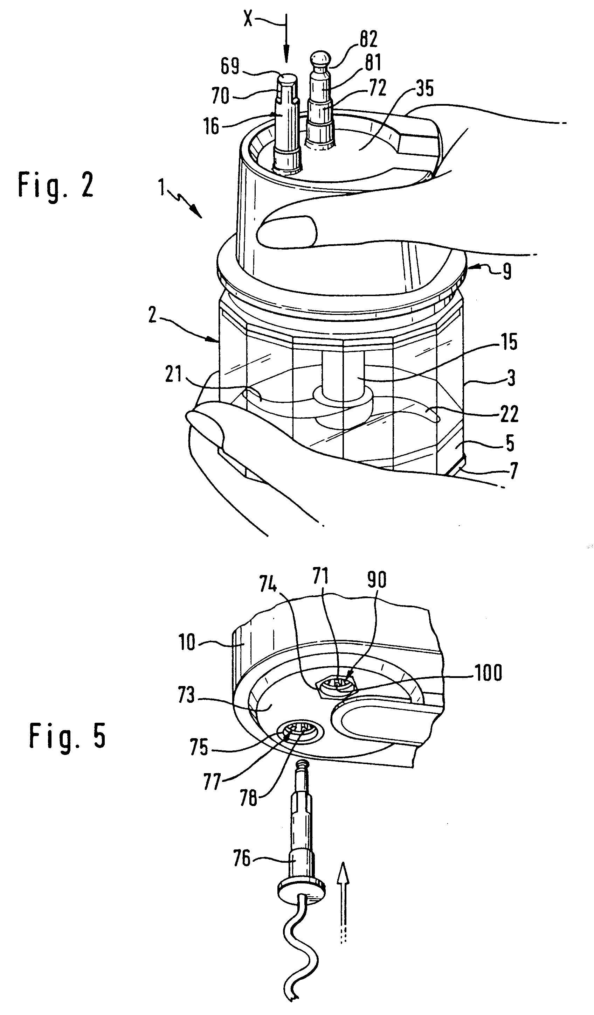

Gemäß den Figuren 1 und 2 ragt das freie Ende 69 der Abtriebswelle 16 über die Bohrung 57 aus dem Oberteil 39 nach oben heraus, wobei an dem freien Ende 69 eine zweite Verzahnung 70 ausgebildet ist, die in Eingriff mit einer im Handrührer 10 ausgebildeten ersten Verzahnung 71 in Eingriff bringbar ist, wenn der Handrührer 10 gemäß Fig. 3 auf das Zusatzgerät 1 wie in der dargestellten Position, aufgesetzt wird.

Wie aus Fig. 1 bis 3 weiterhin ersichtlich, verläuft die Längsachse 51 der Abtriebswelle 16 ziemlich weit am Rand des Zusatzgerätes 1, damit, da das Gehäuse des Handrührers 10 sich über das Zusatzgerät 1 radial nach außen erstreckt, immer noch der Schwerpunkt des Handrührgerätes in der Nähe der Mittellinie 49 verläuft. Hierdurch wird ein Umkippen der Einheit aus Handrührer 10 und Zusatzgerät 1 auch im Betrieb weitgehendst vermieden.

Wie aus Fig. 2 ersichtlich ist, ist neben der Abtriebswelle 16 ein am Oberteil 39 des Deckels 9 nach oben hervorstehender Zapfen 72 ausgebildet, der parallel zur Abtriebswelle 16 verläuft, der aber in Fig. 1 nicht zu erkennen ist, da er direkt in der Zeichenebene hinter der Abtriebswelle 16 verläuft. Der Abstand der Abtriebswelle 16 zu dem Zapfen 72 ist genau so groß, wie der Abstand der an der Unterseite 73 der am Handrührer 10 ausgebildeten Aufnahmebohrungen 74, 75, die zur Aufnahme einerseits der Arbeitswerkzeuge 76, wie Schneebesen, Knethaken etc. und die auch andererseits zur Aufnahme der Abtriebswelle 16 und des Zapfens 72 dienen, wenn der Handrührer 10 als Antriebsgerät für das Zusatzgerät 10 dienen soll. Dabei ist das freie Ende des Zapfens 72 so ausgebildet, wie das freie Ende des Arbeitswerkzeuges 76.

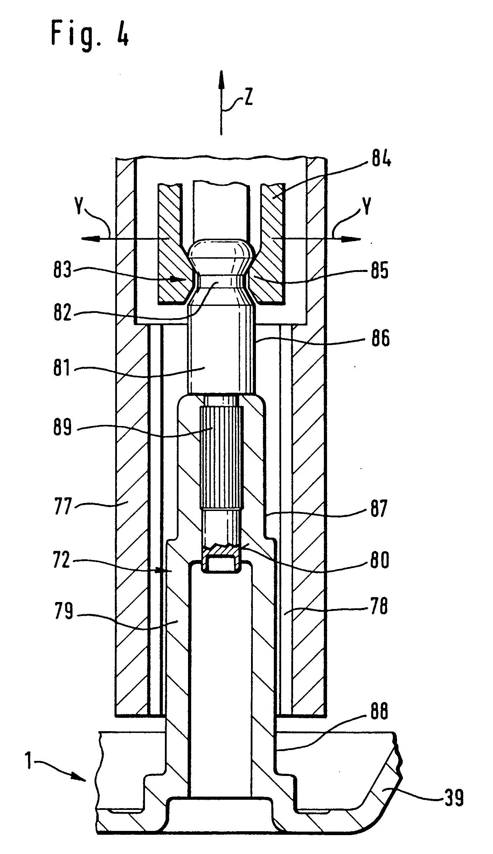

In Fig. 4 wurde der Zapfen 72 in vergrößertem Maßstab dargestellt, wobei hier die Stellung angezeigt wird, in der der Handrührer 10 gerade auf das Zusatzgerät 1 aufgesetzt wurde. Dabei umgibt die im Handrührer 10 drehbar angeordnete und mit einer Längsverzahnung 78 versehene Antriebswelle 77 den Zapfen 72. Der Zapfen 72 besteht aus einem einteilig mit dem Oberteil 39 ausgebildeten, hülsenförmigen Abschnitt 79 mit einer Bohrung 80, in der ein aus Metall hergestellter Stift 81 formschlüssig befestigt ist. Der Stift 81 weist an seinem freien Ende eine Ringnut 82 auf, in die die am Handrührer 10 innerhalb der Antriebswelle 77 ausgebildeten und federnden Arme 85 eingreifen. Die vier federnden Arme 85 sind jeweils diametral gegenüberliegend angeordnet und können durch eine am Handrührer 10 ausgebildete Auswerfereinrichtung (nicht näher dargestellt), die von dem Betätigungsknopf 86 (Fig. 3) betätigt wird, radial nach außen in Richtung Y federnd weggedrückt werden, so daß die an den Armen 85 ausgebildeten Vorsprünge 84 die Ringnut 82 freigeben werden. Hierdurch kann der Handrührer 10 nach oben in Richtung Z vom Zusatzgerät 1 entfernt werden. Werden die Schneebesen oder Knethaken 76 nach Fig. 5 benutzt, so fallen diese nach Betätigung des Betätigungsknopfes 80 nach unten heraus.

Was das Ende im Bereich der Ringnut 82 und der Durchmesser der Abschnitte 86, 87, 88 sowie ihre zugehörigen Längen betrifft, so sind diese den Abmessungen an den freien Enden der Arbeitswerkzeuge 76, wie Schneebesen oder Knethaken, angepaßt, damit eine Arretierung und Zentrierung des Handrührers so auf dem Zapfen 72 ohne aufwendige, gesonderte Befestigungsmittel möglich ist. Der einzige Unterschied gegenüber dem Zapfen 72 und dem Ende der Arbeitswerkzeuge 76 besteht darin, daß an dem Zapfen 72 keine zweite Verzahnung 70, wie sie an der Abtriebswelle 16 und den freien Enden der Arbeitswerkzeuge 76 ausgebildet ist, vorhanden ist. Dies führt dazu, daß der Zapfen 72 lediglich als Zentriervorrichtung für die zweite Antriebswelle 77 des Handrührers 10 dient. Drehen sich dabei die Arme 85 mit der Antriebswelle 77 mit, so entsteht zwischen den Vorsprüngen 84 und der Ringnut 82 eine geringe Reibung, allerdings ohne nennenswerten Verschleiß, den zumindest ist der Stift 81 aus Metall, der mittels des Abschnitts 79 umspritzt wurde. Die dabei von der Bohrung 80 umspritzte Längsverzahnung 89 ist somit drehfest mit dem Abschnitt 79 verbunden.

Die zweite Antriebswelle 77 (Fig. 5) ist über ein Zahnrad (nicht dargestellt) mit dem Getriebe (nicht dargestellt) des Handrührers 10 verbunden. Gleichzeitig ist die erste Antriebswelle 90 (Fig. 5), die mit ihrer Rasteinrichtung (nicht dargestellt) identisch der in Fig. 4 dargestellten Anordnung entspricht, ebenfalls über ein in der Zeichnung nicht dargestelltes Zahnrad mit der Getriebeeinrichtung (nicht dargestellt) des Handrührers 10 verbunden, wobei beide Antriebswellen 90, 71 gegenläufig verlaufen.

Die Wirkungsweise des erfindungsgemäßen Zusatzgerätes ist folgende:

Zunächst wird nach Einbringung von Nahrungsmitteln (nicht dargestellt) der als Deckel ausgebildet Getriebeaufsatz 9 auf die Einfüllöffnung 8 des Behälters 2 aufgesetzt, bis der am Bodenteil 17 ausgebildete Ringbund 91 in die Innenwandung 92 derart eingreift, daß der obere Rand 93 am Rand 94 des Behälters 2 dichtend anliegt. Durch den festen Verschluß kann das sehr scharfe Messer 21, 22 im Betrieb nicht zu Verletzungen einer Bedienungsperson führen. Es versteht sich allerdings von selbst, daß bereits zuvor die Achse 26 mit seiner Hülse 29 in die Bohrung 30 eingesetzt wurde und daß auf die Achse 26 die mit den scharfen Messern 21, 22 versehene Nabe 15 drehfest aufgesetzt wurde. Bei verschlossenem Behälter 2 greift dabei der an der Nabe 15 ausgebildete Mitnehmer 18 in eine der Ausnehmungen 20 und gleichzeitig liegt das freie Ende 95 des Abtriebs 11 an einem am freien Ende der Nabe 15 hervorstehenden Noppen 96 an. Es kann aber auch dazwischen ein geringes Lüftspiel vorhanden sein, wichtig ist nur, daß das Arbeitswerkzeug 13 im Betrieb nicht allzuviel Spiel und somit allzuweit nach oben wandern kann.

Nun wird gemäß Fig. 3 der Handrührer 10 so auf das Zusatzgerät 1 aufgesetzt, daß die Abtriebswelle 16 in die Aufnahmebohrung 74 und der Zapfen 72 in die Aufnahmebohrung 75 gelangt. Ist dabei die an der ersten Antriebswelle 90 ausgebildete erste Verzahnung 71 gerade so ausgerichtet, daß sie mit der an der Abtriebswelle 16 ausgebildeten zweiten Verzahnung 70 fluchtet, so läßt sich das Gerät soweit verschieben, bis die Vorsprünge 84 der Arme 85 federnd in die Ringnut 82 des Zapfens 72 einrasten. Der Handrührer 10 liegt dabei gleichzeitig etwa bündig an dem Boden 97 der Ausnehmung 35 an, und es besteht zwischen dem Handrührer 10 und dem Zusatzgerät 1 eine lösbare aber feste Verbindung.

Fluchtet die Verzahnung 71 der Abtriebswelle 90 des Handrührers 10 nicht mit der zugehörigen zweiten Verzahnung (nicht dargestellt), so verschiebt sich bei weiterer Absenkung des Handrührers 10 die Abtriebswelle 16 in Richtung X gemäß den Figuren 1 und 2, bis die Rasteinrichtung 83 gemäß Fig. 4 eingerastet ist.

Wird nun gemäß des Ein-/Ausschalters 98 nach Fig. 3 der Handrührer 10 eingeschaltet, so verschiebt sich die Abtriebswelle 16 entgegen der Verschieberichtung X nach oben, wenn die erste Verzahnung 71 an der Antriebswelle 90 mit der korrespondierenden zweiten Verzahnung 70 an der Abtriebswelle 16 korrespondiert. Bereits nach weniger als einer Umdrehung ist ein drehfester Antrieb zwischen Antriebswelle 90 und Abtriebswelle 16 hergestellt. Die Drehmomentübertragung M wird über das zweite Zahnrad 61 auf das erste Zahnrad 43 übertragen, von wo diese Drehung über die Welle 36 auf den Abtrieb 11 erfolgt. Nunmehr nimmt der rotierende Abtrieb 11 über seine Vorsprünge 19 den Mitnehmer 18 mit, wodurch die Nabe 15 mit den zugehörigen Messern 21, 22 in Drehung versetzt werden. Im Behälter 2 befindliche Nahrungsmittel werden hierdurch auf schnellste Weise zerkleinert. Durch das Zusatzgerät 1 können neben dem Rühren, Mischen, Kneten und Schaumigschlagen von Nahrungsmitteln nunmehr auch Nahrungsmittel, wie Petersilie, Zwiebeln etc. kleingehackt werden.

Nach Beendigung des Zerkleinerungsvorganges kann der Getriebeaufsatz 9 vom Behälter 2 entnommen werden und es kann die Nabe 15 mit den Arbeitswerkzeugen 21, 22 sowie die Achse 26 aus dem Behälter 2 entnommen werden. Nunmehr können die kleingehackten Nahrungsmittel dem Behälter 2 entnommen werden oder es kann der Behälter 2 zur Aufbewahrung der Nahrungsmittel, beispielsweise in einem Kühlschrank, aufbewahrt werden, wobei allerdings hierzu die am Boden 4 befindliche Platte 7 von dort abgenommen und in die Einfüllöffnung 8 gesetzt wird, so daß diese den Behälter 2 dichtend verschließt.

## Patentansprüche

1. Elektrisch betriebener Handrührer (10) mit einem Zusatzgerät (1), wobei letzteres mit einem durch einen Deckel (9) verschließbaren Behälter (2) versehen ist, mit mindestens zwei zum lösbaren Verbinden mit verschiedenen Arbeitswerkzeugen (76), wie Schneebesen oder Knethaken, geeignete Antriebswellen (90, 77), von denen eine durch Aufsetzen des Handrührers (10) auf den Deckel (9) des Zusatzgerätes (1) mit einer durch den Deckel (9) nach oben hindurchtretenden Abtriebswelle (16) drehfest verbunden werden kann, wobei die Abtriebswelle (16) mit einem im Innern des Behälters (2) zum Zwecke der Zerkleinerung von Nahrungsmittel antreibbaren Messers (21, 22, 26, 15) verbunden ist und wobei die drehfeste Verbindung durch Eingriff einer ersten (71) in der Antriebswelle (90) ausgebildeten und einer dazu korrespondierenden zweiten (70), an der Abtriebswelle (16) ausgebildeten Verzahnung erfolgt,
**dadurch gekennzeichnet**,
daß eine An- oder Abtriebswelle (16, 90) beim Einkuppelvorgang von Handrührer (10) und Zusatzgerät (1) gegen die Kraft einer Feder (67) axial verschiebbar ist.

2. Handrührer mit einem Zusatzgerät nach Anspruch 1,
**dadurch gekennzeichnet,**
daß auf dem Deckel (9) des Zusatzgerätes (1) ein Zapfen (72) hervorsteht, der in die zweite Antriebswelle (77) zentrierend eingreift, mit dieser aber nicht drehfest verbunden ist.

3. Handrührer mit einem Zusatzgerät nach Anspruch 2, wobei in axialer Richtung die lösbare Verbindung zwischen Antriebswelle (90, 77) und Arbeitswerkzeug (76) durch eine federnde Rasteinrichtung (83) erreicht wird,
**dadurch gekennzeichnet**,
daß das freie Ende des Zapfens (72) so geformt ist, daß es in der Rasteinrichtung die Rolle des Arbeitswerkzeuges (76) übernimmt.

4. Handrührer mit einem Zusatzgerät nach Anspruch 3,
**dadurch gekennzeichnet**,
daß der Zapfen (72) im Deckel (9) drehfest angeordnet ist.

5. Handrührer mit einem Zusatzgerät nach Anspruch 3,
**dadurch gekennzeichnet**,
daß der Zapfen (72) im Deckel drehbar angeordnet ist.

6. Handrührer mit einem Zusatzgerät nach Anspruch 1,
**dadurch gekennzeichnet**,
daß das Messer (21, 22, 26, 15) über ein aus zumindest einem ersten (43) und zweiten (61) Zahnrad bestehenden Zahnradgetriebe (14) mit der Abtriebswelle (16) verbunden ist, daß die Zahnräder (43, 61) längsverzahnt sind und daß eines der beiden Zahnräder (43) so lange Zähne (63) aufweist, daß in jeder Stellung der beweglichen Abtriebswelle (16) ein Eingriff zwischen beiden Zahnrädern (43, 61) besteht.

7. Handrührer mit einem Zusatzgerät nach Anspruch 6,
**dadurch gekennzeichnet**,
daß der Deckel (9) von einem Getriebeaufsatz mit Ober- (39), Seiten-(33) und Bodenteil (17) gebildet wird und daß die Abtriebswelle (16) auf einem im Bodenteil (17) drehfest gelagerten Zentrierbolzen drehbar gelagert ist.

8. Handrührer mit einem Zusatzgerät nach Anspruch 7,
**dadurch gekennzeichnet**,
daß die Abtriebswelle (16) mit dem zweiten Zahnrad (61) versehen ist, welches mit dem ersten Zahnrad (43) im Getriebeaufsatz (9) ausgebildet ist.

9. Handrührer mit einem Zusatzgerät nach Anspruch 8,
**dadurch gekennzeichnet**,
daß zwischen dem zweiten Zahnrad (61) und dem Bodenteil (17) die Feder (67) ausgebildet ist, die den Zentrierbolzen (52) konzentrisch umgibt.

10. Handrührer mit einem Zusatzgerät nach Anspruch 1,
**dadurch gekennzeichnet**,
daß beim Aufsetzvorgang des Handrührers (10) dieser auch bei noch fehlendem Eingriff zwischen erster (71) und zweiter (70) Verzahnung auf dem Deckel (9) zur Anlage gelangt.

## Claims

1. An electrically operated hand mixer (10) including an attachment (1), the latter being provided with a bowl (2) closable by a lid (9), at least two drive shafts (90, 77) adapted for detachable coupling with various processing tools (76), such as whisk attachments or kneading blades, one of the drive shafts being adapted to be non-rotatably coupled with an output shaft (16) extending upwardly through the lid (9), when the hand mixer (10) is placed on the lid (9) of the attachment (1), the output shaft (16) being connected with a drivable blade (21, 22, 26, 15) mounted in the interior of the bowl (2) for chopping foods, and the non-rotatable connection being established by engagement of a first toothing (71) provided in the drive shaft (90) with a mating second toothing (70) provided on the output shaft (16),
**characterized** in that a drive shaft or output shaft (19, 90) is axially displaceable in opposition to the force of a spring (67) during the coupling action of the hand mixer (10) and the attachment (1).

2. A hand mixer including an attachment as claimed in claim 1,
**characterized** in that a pin (72) projects from the lid (9) of the attachment (1) and is in centering engagement, but not in non-rotatable connection, with the second drive shaft (77).

3. A hand mixer including an attachment as claimed in claim 2, the detachable coupling between drive shaft (90, 77) and processing tool (76) in an axial direction being achieved by a resilient locking arrangement (83),
**characterized** in that the free end of the pin (72) is so formed as to perform the function of the processing tool (76) in the locking arrangement.

4. A hand mixer including an attachment as claimed in claim 3,
**characterized** in that the pin (72) is arranged in the lid (9) locked against rotation.

5. A hand mixer including an attachment as claimed in claim 3,
**characterized** in that the pin (72) is arranged rotatably in the lid.

6. A hand mixer including an attachment as claimed in claim 1,
**characterized** in that the blade (21, 22, 26, 15) is connected to the output shaft (16) by way of a toothed wheel gearing (14) comprising at least one first (43) and second (61) toothed wheel, in that the toothed wheels (43, 61) have a longitudinal toothing, and in that the teeth (63) of one of the two toothed wheels (43) are so long as to provide an engagement between the two toothed wheels (43, 61) in every position of the movable output shaft (16).

7. A hand mixer including an attachment as claimed in claim 6,
**characterized** in that the lid (9) is formed of a gear mount comprised of upper part (39), lateral wall (33) and bottom part (17), and in that the output shaft (16) is pivoted about a centering pin non-rotatably mounted in the bottom part (17).

8. A hand mixer including an attachment as claimed in claim 7,
**characterized** in that the output shaft (16) is furnished with the second toothed wheel (61) which is designed with the first toothed wheel (43) in the gear mount (9).

9. A hand mixer including an attachment as claimed in claim 8,
**characterized** in that the spring (67), which concentrically encompasses the centering pin (52), is interposed between the second toothed wheel (61) and the bottom part (17).

10. A hand mixer including an attachment as claimed in claim 1,
**characterised** in that, during installation, the hand mixer (10) moves into abutment on the lid (9) even in the absence of an engagement between the first toothing (71) and the second toothing (70).

## Revendications

1. Mixeur à main électrique (10) avec un dispositif accessoire (1), ce dernier étant pourvu d'un récipient (2) susceptible d'être refermé par un couvercle (9), présentant au moins deux arbres d'entraînement (90, 77) appropriés pour la liaison détachable de différents outils de travail (76), tel qu'un fouet ou un crochet pétrisseur, dont un arbre peut être relié solidairement en rotation, en plaçant le mixeur à main (10) sur le couvercle (9) du dispositif accessoire (1), à un arbre mené (16) passant vers le haut à travers le couvercle (9), l'arbre mené (16) étant relié à un couteau (21, 22, 26, 15) susceptible d'être entraîné à l'intérieur du récipient (2) pour fragmenter des denrées alimentaires, et la liaison solidaire en rotation s'effectuant par engrènement d'une première denture (71) réalisée dans l'arbre menant (90) et d'une seconde denture (70) correspondante à celle-ci réalisée dans l'arbre mené (16), caractérisé en ce qu'un arbre menant ou mené (16, 90) est axialement mobile à l'encontre de la force d'un ressort (67) lors de l'opération d'accouplement du mixeur à main (10) et du dispositif accessoire (1).

2. Mixeur à main avec un dispositif accessoire selon la revendication 1, caractérisé en ce que sur le couvercle (9) du dispositif accessoire (1) dépasse un pivot (72) qui s'engage avec centrage dans le second arbre menant (77) mais qui n'est pas relié solidairement en rotation à celui-ci

3. Mixeur à main avec un dispositif accessoire selon la revendication 2, dans lequel la liaison détachable entre l'arbre menant (90, 77) et l'outil de travail (76) est atteinte en direction axiale par un dispositif d'enclenchement élastique (83), caractérisé en ce que l'extrémité libre du pivot (72) est formée de telle sorte que dans le dispositif d'enclenchement, elle remplit la fonction de l'outil de travail (76).

4. Mixeur à main avec un dispositif accessoire selon la revendication 3, caractérisé en ce que le pivot (72) est agencé solidairement en rotation dans le couvercle (9).

5. Mixeur à main avec un dispositif accessoire selon la revendication 3, caractérisé en ce que le pivot (72) est agencé en rotation dans le couvercle.

6. Mixeur à main avec un dispositif accessoire selon la revendication 1, caractérisé en ce que le couteau (21, 22, 26, 15) est relié à l'arbre mené (16) via une transmission à roue dentée (14) constituée au moins par une première roue dentée (43) et par une seconde roue dentée (61), en ce que les roues dentées (43, 61) présentent des dentures longitudinales, et en ce que l'une des deux roues dentées (43) présente des dents (63) aussi longues qu'un engrènement entre les deux roues dentées (43, 61) s'effectue dans chaque position de l'arbre mené mobile (16).

7. Mixeur à main avec un dispositif accessoire selon la revendication 6, caractérisé en ce que le couvercle (9) est formé par un agencement de transmission comportant une partie supérieure (39), une partie latérale (33) et une partie de fond (17), et en ce que l'arbre mené (16) est monté en rotation sur un boulon de centrage monté solidairement en rotation dans la partie de fond (17).

8. Mixeur à main avec un dispositif accessoire selon la revendication 7, caractérisé en ce que l'arbre mené (16) est pourvu de la seconde roue dentée (61) qui est réalisée avec la première roue dentée (43) dans l'agencement de transmission (9).

9. Mixeur à main avec un dispositif accessoire selon la revendication 8, caractérisé en ce qu'il est prévu, entre la seconde roue dentée (61) et la partie de fond (17), le ressort (67) qui entoure de façon concentrique le boulon de centrage (52).

10. Mixeur à main avec un dispositif accessoire selon la revendication 1, caractérisé en ce que lors de la mise en place du mixeur à main (10), celui-ci vient en appui sur le couvercle (9) même lorsque l'engrènement entre la première denture (71) et la seconde denture (70) n'a pas encore lieu.
